# Europäisches Patentamt
# European Patent Office
# Office européen des brevets

(19)

(11) Veröffentlichungsnummer: **0 187 238**
**B1**

(12) **EUROPÄISCHE PATENTSCHRIFT**

(45) Veröffentlichungstag der Patentschrift:
29.03.89

(51) Int. Cl.⁴: **F 16 L 37/28,** F 16 L 29/00

(21) Anmeldenummer: **85114834.6**

(22) Anmeldetag: **22.11.85**

---

(54) Auch bei unter Druck stehendem Stecker kuppelbare Rohrabreisskupplung für insbes. Hydraulikleitungen.

---

(30) Priorität: **08.12.84 DE 3444855**

(43) Veröffentlichungstag der Anmeldung:
**16.07.86 Patentblatt 86/29**

(45) Bekanntmachung des Hinweises auf die Patenterteilung:
**29.03.89 Patentblatt 89/13**

(84) Benannte Vertragsstaaten:
**FR GB IT**

(56) Entgegenhaltungen:
**EP-A-0 051 201**
**EP-A-0 086 130**
**DE-A-3 022 239**
**DE-B-2 854 511**

(73) Patentinhaber: **Aeroquip GmbH, Ruhrstrasse 11, D-7570 Baden- Baden (DE)**

(72) Erfinder: **Steuerwald, Alfred, Kirchheim Bolander Strasse 4, D-6719 Orbis (DE)**

(74) Vertreter: **Patentanwälte Dipl.- Ing. Rudolf Bibrach Dipl.- Ing. Elmar Rehberg, Postfach 1453 Pütterweg 6, D-3400 Göttingen (DE)**

---

LIBER, STOCKHOLM 1989

EP 0 187 238 B1

## Beschreibung

Auch bei unter Druck stehendem Stecker kuppelbare Rohrabreißkupplung für insbes. Hydraulikleitungen.

Die Erfindung bezieht sich auf eine Rohrabreißkupplung mit den im Oberbegriff des Anspruches 1 angegebenen Merkmalen. Jede derartige Kupplung weist üblicherweise einen Stecker und eine Muffe auf, wobei die Kupplung sowohl dann kuppelbar sein soll, wenn der Stecker unter Druck steht, als auch dann, wenn der Stecker drucklos ist. Eine Rohrabreißkupplung ist eine solche Kupplung, bei der die übliche Schiebehülse normaler Druck-Zug-Kupplungen ortsfest gelagert ist und somit als Verriegelungshülse bezeichnet werden kann. Bei einer Rohrabreißkupplung wird der durch einen gegenüber der Verriegelungshülse verschiebbaren Kupplungskörper die Abreißfunktion erreicht wird.

Eine Rohrabreißkupplung mit den im Oberbegriff des Anspruches 1 aufgeführten Merkmalen ist aus der DE-A-3 238 410 bekannt. Bei dieser Kupplung läßt sich nicht nur der Stecker unabhängig davon, ob er unter Druck steht oder nicht, mit der Muffe kuppeln. Es wird vielmehr auch bereits eine Verriegelung der Ventilkörper nach ordnungsgemäßen Kupplungsvorgang erreicht, so daß ein Zuschlagen des freien Durchgangs durch die Kupplung nicht möglich ist, wiederum gleichgültig, in welcher Richtung die Durchströmung der Kupplung erfolgt. Zur Verriegelung der Ventilkörper in dieser Stellung ist der Sternkörper der Muffe in ihrem Kupplungskörper gegen die Kraft der zugehörigen Schließkörper verschieblich gelagert. Der Sternkörper besitzt Fortsätze, der mit einem gehäusefesten, also mit der Verriegelungshülse verbundenen Anschlag zusammenarbeitet. Der Schaft des im Sternkörper geführten Ventilkörpers ist relativ lang ausgebildet und besitzt eine Mehrzahl von Nuten, die teils relativ zum einen Ende und teils zum anderen Ende der axialen Erstreckung des Sternkörpers am Schaft des Ventilkörpers angeordnet sind. Der Sternkörper wird von einer Schenkelfeder mit Spiel überbrückt. Die Schenkelfeder kann zum Zwecke der Verriegelung des Ventilkörpers in eine Verriegelungsnut des Ventilkörpers eingreifen. Sie wird in ihrer Bewegung jedoch von der Bewegung des Sternkörpers gesteuert, wobei die miteinander in Wirkkontakt tretenden Teile vergleichsweise kompliziert und mit engen Toleranzen behaftet hergestellt werden müssen, weil zur Übertragung der Bewegung teilweise die Reibung zwischen den Einzelteilen ausgenutzt wird.

Eine ähnliche, jedoch noch sehr viel komplizierter aufgebaute Rohrabreißkupplung zeigt die US-A-3 791 411. Diese Kupplung ist zusätzlich auch noch dann kuppelbar, wenn die muffenseitige Leitung während des Kupplungsvorganges unter Druck steht. Bei der dortigen Kupplung sollzwar auch dann eine Verriegelung der beiden Ventilkörper möglich sein, wenn ein druckloser Stecker gekuppelt wurde; dabei wird ein im Innern angeordnetes Kugelgesperre mit einer radial federbelasteten Kugel benutzt. Im Ventilkörper der Muffe ist gegen eine weitere Feder begrenzt verschiebbar gelagert ein Kolben vorgesehen, der mit der Stirnfläche des Ventilkörpers des Steckers ebenfalls zusammenarbeitet. Die Anzahl der Einzelteile ist damit erhöht und es finden insgesamt 4 Federn Verwendung, die kraftmäßig aufeinander sorgfältig abgestimmt sein müssen. Hierdurch wird die Kupplung störanfällig. Die Betriebssicherheit wird beeinträchtigt. Ob beim Kuppeln eines drucklosen Steckers eine Verriegelungsstellung erreicht wird, erscheint zweifelhaft. Beim Kuppeln eines unter Druck stehenden Steckers muß der Durchgang durch die Kupplung - wie allgemein üblich - durch Einschalten der Druckquelle muffenseitig erzielt werden. Ob dabei der volle einfache Ventilkörperhub des Ventilkörpers des Steckers erreicht wird, ist wiederum von der Mengenströmung abhängig.

Die DE-B-2 712 117 zeigt eine Zug-Druck-Kupplung, bei der ebenfalls der Ventilkörper des Steckers nur um den einfachen Ventilkörperhub verschiebbar im Sternkörper gelagert ist. Der Sternkörper bildet auch hier einen festen Anschlag für die Begrenzung des einfachen Ventilkörperhubes des Ventilkörpers des Steckers. Es ist hier ein Sperrmittel in Form eines radial verschiebbaren federbelasteten Nockens vorgesehen, der in den Verschiebeweg des abgesetzten Schaftes des Ventilkorpers der Mutte eingreift und darüber hinaus mit einer Schrägfläche zusammenarbeitet. Hierdurch wird eine Verriegelung def Ventilkörper nach ordnungsgemäßen Kupplungsvorgang erreicht. Dabei ist Voraussetzung, daß die Schließfeder, die den Ventilkörper der Muffe in Schließrichtung belastet, stärker dimensioniert ist als die entsprechende Schließfeder des Steckers. Damit soll erreicht werden, daß in der gekuppelten und geöffneten Stellung die Ventilkörper an dem Anschlag anliegen, der den einfachen Ventilkörperhub des Steckers begrenzt. Dieser Kraftüberschuß bildet je nach dem Auftreten der Rückströmungen nur ein relativ kleines Hindernis. Es ist damit durchaus möglich, daß der Ventilkörper des Steckers zuschlägt. Wird nach einem solchen Zuschlagen jedoch der Durchgang durch die gekuppelte Kupplung wieder geöffnet, dann findet eine Verriegelung durch den radial federbelasteten Nocken statt. Dies bedeutet, daß zu einer ordnungsgemäßen Verriegelung vom Ventilkörper der Muffe nicht nur der einfache Öffnungshub, sondern ein Weg, der größer ist als der einfache Öffnungshub, zurückgelegt werden muß, wobei nur in einem solchen Falle die Verriegelung stattfindet. Wird dagegen ein druckloser Stecker gekuppelt, dann wird infolge der Abstimmung der Schließfedern der Ventilkörper der Muffe nur den einfachen Öffnungshub zurücklegen, so daß eine Verriegelung nicht stattfindet. Das einmalige Zuschlagen des Ventilkörpers des Steckers bei auftretenden Rückströmungen ist damit Voraussetzung für das Erreichen der Verriegelungsstellung der Ventilkörper. Eine solche Funktionsweise kann nicht befriedigen.

Die DE-A-3 015 601 zeigt im Ausführungsbeispiel eine Zug-Druck-Kupplung, bei der im Sternkörper der Muffe ein Kugelgesperre untergebracht ist, welches, da im Innern angeordnet, nicht durch eine Verriegelungshülse betätigt werden kann. Dieses Kugelgesperre ist mit einem Betätigungsgesperre, welches ebenfalls Kugeln aufweist, kombiniert. Es wird hier die Verschieberichtung zur Betätigung dieses zweiten Kugelgesperres herangezogen, nämlich die Umkehr der Bewegungsrichtung des Ventilkörpers der Muffe während bzw. nach dem Kuppelvorgang. Die Schließfeder des Ventilkörper des Steckers ist stärker dimensioniert und besitzt damit eine größere Kraft als die Schließfeder des Ventilkörpers der Muffe. Auf diese Weise wird erreicht, daß beim Kuppeln eines drucklosen Steckers sowie auch beim Kuppeln eines unter Druck stehenden Steckers immer der gleiche Bewegungsablauf erfolgt und auch die einzelnen Teile der Kupplung immer die gleiche Relativlage zueinander einnehmen. Nach dem Verriegeln des Steckers in der Muffe kann der innere Durchgang durch die Kupplung nur dadurch herbeigeführt werden, daß die muffenseitig vorgesehene Druckquelle eingeschaltet wird und mit ihrer Hilfe das Öffnen des Ventilkörpers des Steckers erfolgt. Ob dabei der Ventilkörper des Steckers den vollen einfachen Ventilhub zurücklegt, ist im wesentlichen von der durch die Kupplung fließenden Strömungsmenge und den dabei auf den Ventilkörper des Steckers einwirkenden dynamischen Kräften abhängig. Reichen diese Kräfte aus, um den einfachen Ventilkörperhub am Stecker zu vollenden, dann verriegelt das im Innern angeordnete Kugelgesperre zuverlässig, und zwar gleichgültig, ob der Stecker vorher unter Druck stand oder nicht. Wird aber die betreffende Mengenströmung nicht erreicht und öffnet demzufolge der Ventilkörper des Steckers nicht durch Erreichen des vollen einfachen Ventilkörperhubes, dann können sich Zwischenstellungen ergeben, in denen die beiden Ventilkörper nicht blockiert sind, so daß ein Zuschlagen des Ventilkörpers des Steckers bei auftretenden Rückströmungen eintreten kann.

Auch die EP-A-0 086 130 zeigt eine Zug-Druck-Kupplung, also keine Rohrabreißkupplung, sondern eine Kupplung, bei der die Muffe ein Gehäuse und eine demgegenüber verschiebbare Verriegelungshülse, jedoch keinen gegenüber ihrem Gehäuse verschiebbaren Kupplungskörper aufweist. Auf seiten der Muffe ist ein ortsfest an dem Gehäuse gelagerter Sternkörper vorgesehen, der einerseits eine Führung für den Ventilkörper der Muffe und andererseits ein Käfig für ein Kugelgesperre bildet. Eine zugehörige Verriegelungshülse ist einerseits von einer schwachen Feder beaufschlagt und wird andererseits von der Strömung des durchfließenden Druckmediums betätigt. Dieses innere Kugelgesperre arbeitet somit nicht mechanisch und nicht zwangsläufig, sondern ist in hohem Maß abhängig von der Federbelastung, der Anströmfläche und der Strömungsgeschwindigkeit. Außerdem kehrt dieses Kugelgesperre nach dem Ende einer Durchströmung immer in seine Offenstellung zurück, was eine weitere Unsicherheit darstellt.

Der Erfindung liegt die Aufgabe zugrunde, eine Rohrabreißkupplung der eingangs beschriebenen Art aufzuzeigen, die besonders einfach aufgebaut ist und somit eine hohe Betriebssicherheit aufweist. Dabei soll der Stecker sowohl drucklos als auch unter Druck stehend gekuppelt werden können. In beiden Fällen muß die Verriegelung der Ventilkörper erreicht werden. Die Verriegelung der beiden Ventilkörper bei drucklos gekuppeltem Stecker soll sofort nach Beendigung des Kupplungsvorganges eintreten, noch bevor die muffenseitige Druckmittelquelle eingeschaltet ist. Der Stecker soll auch dann aus der Muffe herausziehbar sein, wenn er unter Druck stehend gekuppelt wurde und muffenseitig die Druckquelle noch nicht eingeschaltet worden ist, wie es bei einem versehentlich in die falsche Muffe eingekuppelten Stecker der Fall ist.

Erfindungsgemäß wird dies dadurch erreicht, daß der Sternkörper ortsfest an dem verschiebbaren Kupplungskörper gelagert ist und mindestens eine Durchbrechung für den Eingriff eines Teils des Sperrmittels in eine im Schaft des Ventilkörpers angeordnete Verriegelungsnut aufweist und daß ein weiterer Teil des Sperrmittels den Sternkörper in axialer Richtung mit Spiel übergreifend vorgesehen ist und einerseits von dem gehäuseseitigen Anschlag verschiebbar und andererseits von einer Feder belastet angeordnet ist.

Dies bedeutet zunächst einmal, daß der Sternkörper nicht mehr relativ beweglich zu dem Kupplungskörper ist, sondern mit diesem gleichsam verschiebefest nach beiden Richtungen verbunden ist, so daß er die Bewegungen des Kupplungskörpers mitmacht. Dies eröffnet nun wiederum die Möglichkeit, das Sperrmittel direkt den Sternkörper übergreifen zu lassen und relativ zu diesem einerseits von einem gehäusefesten Anschlag, andererseits von der Kraft einer Feder zu betätigen, so daß Reibungskräfte für die Betätigung des Sperrmittels nicht mehr herangezogen werden. Damit erhöht sich die Betriebssicherheit. Die Durchbrechung im Sternkörper nutzt in geschickter Weise den Sternkörper selbst, der ja ortsfest verankert ist, dazu, um die Verriegelungsstellung zu garantieren. Es findet also letztlich eine unmittelbare kraftmäßige Abstützung des Ventilkörpers an dem Kupplungskörper statt. Durch die feste Lagerung des Sternkörpers in dem Kupplungskörper ergibt sich natürlich auch eine gute Führung des Ventilkörpers im Vergleich zu einem beweglich im Kupplungskörper gelagerten Sternkörper. Eine zusätzliche Führung für den Ventilkörper erübrigt sich. Weiterhin ist es möglich, die für die Betätigung des Sperrmittels erforderliche Feder auf relativ kleinem Radius anzuordnen, wodurch in vorteilhafter Weise der freie Durchgangsquerschnitt der Kupplung kaum belastet wird. Der Schaft des Ventilkörpers kann kurz gestaltet werden und muß nur eine einzige Verriegelungsnut aufweisen. Ein Herausragen des freien Endes des Schaftes des Ventilkörpers aus dem Sternkörper in Richtung auf die Druckquelle ist nicht mehr erforderlich. Durch die Anordnung der Durchbrechung innerhalb der axialen Länge des Sternkörpers kann das Sperrmittel selbst axial klein und gedrungen gebaut werden.

Der Verschiebeweg des Kupplungskörpers gegenüber der ortsfesten Verriegelungshülse bis zum Erreichen der Ausweichnut durch die Kugeln des Kugelgesperres ist gleich groß oder größer ausgebildet als die Summe aus dem Abstand des weiteren Teils des Sperrmittels von dem gehäuseseitigen Anschlag und dem Öffnungsweg des Sperrmittels. Dies bedeutet, daß der gehäuseseitige Anschlag auf jeden Fall mit dem Sperrmittel in Wirkverbindung tritt, gleichgültig, ob ein unter Druck stehender Stecker oder ein druckloser Stecker gekuppelt wird. In beiden Fällen wird am Ende des Kupplungsvorganges die Verriegelungsstellung erreicht, d. h. es werden die beiden Ventilkörper zwischen mechanischen Anschlägen am Sternkörper des Steckers und dem Sperrmittel festgesetzt. Die Verriegelungsnut im Schaft des Ventilkörpers der Muffe endet in einem Widerlager für das Sperrmittel, welches in der verriegelten Stellung nicht überwunden werden kann. Das Widerlager ist in einer dem einfachen Ventilkörperhub entsprechenden Entfernung von dem einen Teil des Sperrmittels in der Ausgangsstellung angeordnet. Das Widerlager wirkt in Verbindung mit dem Sperrmittel derart, daß der Ventilkörper der Muffe in der Verriegelungsstellung an der Zurücklegung einer Bewegung, die dem zweiten bzw. doppelten Ventilkörperhub entspricht, gehindert ist. Die Feder zur Beaufschlagung des Sperrmittels kann die Schließfeder des Ventilkörpers der Muffe sein, d. h. die ohnehin erforderliche Schließfeder kann eine Doppelfunktion erhalten und damit zusätzlich zur Betätigung des Sperrmittels herangezogen werden.

In einer ersten Ausführungsform kann das Sperrmittel ein Kugelgesperre sein, wobei der Sternkörper einen Kugelkäfig für die zum Eingriff in die Verriegelungsnut des Schaftes des Ventilkörpers bestimmten Kugeln bildet und von einem Verschiebering umgeben ist, dessen Fortsätze den Stern körper axial übergreifen. Diese Fortsätze sind dazu vorgesehen und bestimmt, um mit dem gehäuseseitigen Anschlag in Wirkverbindung zu treten. Andererseits wird das Kugelgesperre vorzugsweise durch die Schließfeder des Ventilkörpers der Muffe in Richtung auf die Verriegelungsstellung beaufschlagt. Dieses Kugelgesperre läßt sich auf relativ kleinem Raum unterbringen und sicher handhaben. Die Verriegelungsnut kann eine dem einfachen Ventilkörperhub entsprechende Breite aufweisen. Damit wird der Ventilkörper im Bereich des einfachen Öffnungshubes gegenüber dem Sperrmittel beweglich.

Eine andere Ausführungsform kennzeichnet sich dadurch, daß das Sperrmittel eine Schenkelfeder aufweist, die den Sternkörper überbrückt und mit ihren freien Enden durch die Durchbrechung des Sternkörpers in die Verriegelungsnut im Schaft des Ventilkörpers eingreift. Das Sperrmittel wird auf diese Art und Weise sehr einfach, und zwar einteilig, ausgebildet, weil eine solche Schenkelfeder federnd nachgiebig ist und damit den ersten und den zweiten Teil des Sperrmittels, die bei einem Kugelgesperre getrennte Teile sind, gleichzeitig verwirklichen kann. Außerdem läßt sich eine solche Schenkelfeder sehr einfach und preiswert herstellen.

Die Durchbrechung im Sternkörper kann aus etwa parallelgeführten und den Innendurchmesser schneidenden Abfräsungen bestehen, an die sich in Schließrichtung des Ventilkörpers Rastnocken für die freien Enden der Schenkelfeder anschließen. Diese Rastnocken sind erforderlich, um die Möglichkeit zu eröffnen, daß in der entriegelten Stellung des Sperrmittels der Ventilkörper der Muffe den doppelten Ventilkörperhub zurücklegt. Die Durchbrechung befindet sich auch hier im mittleren Bereich der axialen Erstreckung des Sternkörpers, also jedenfalls nicht in dessen Endbereichen.

In radialer Richtung gesehen - kann der Abstand zwischen einer Abfräsung und dem zugehörigen Rastnocken mindestens der halben Materialstärke der Schenkelfeder - vorzugsweise etwas mehr - entsprechen, wobei die Abfräsung und der Rastnocken etwa symmetrisch zu der Umfangsfläche des Schaftes des Ventilkörpers angeordnet sind. Die Schenkelfeder besteht sinnvollerweise aus gebogenem Material mit kreisrundem Querschnitt. Zwischen dem Rastnocken und der Abfräsung ist ein solcher Abstand bzw. ein solcher Durchmessersprung, daß die freien Enden der Schenkelfeder diesen Sprung nicht überwinden können, wenn sie sich in der Verriegelungsnut befinden. Die Verriegelungsnut besitzt hier nur in ihrer einen Richtung das Widerlager, während in der anderen Richtung eine Schrägfläche vorgesehen ist, die das Aufbleiben der freien Enden der Schenkelfeder auf den entsprechenden Teil des Schaftes des Ventilkörpers gestatten. Sind aber die freien Enden erst einmal derart weit auseinandergebogen, dann ist es möglich, den weiteren Schritt auf die Rastnocken hin zu tun, und zwar durch eine kraftmässige Verschiebung der Schenkelfeder über den gehäuseseitigen Anschlag. Sind die freien Enden aber im Bereich der Rastnocken gehalten, dann befindet sich das Sperrmittel in der entriegelten Stellung, d. h. der Ventilkörper der Muffe kann gegenüber dem Sternkörper auch den zweifachen Ventilkörperhub zurücklegen. Diese geometrische Gestaltung der beschriebenen Teile läßt einerseits eine einfache Herstellung auf kleinem Durchmesser und andererseits eine große Betriebssicherheit zu.

Ergänzend kann der Sternkörper im Bereich der Abfräsungen noch Vorsprünge aufweisen, an denen sich die Feder, insbes. die Schließfeder des Ventilkörpers, in der Verriegelungsstellung der Schenkelfeder abstützt. Dies bedeutet, daß das Einfedern der freien Enden der Schenkelfeder in der Verriegelungsstellung durch die Schließfeder, die ja in 90° dazu wirkt, nicht behindert wird.

Ausführungsbeispiele der Erfindung sind in der Zeichnung dargestellt und werden im Folgenden näher beschrieben. Es zeigen:

Fig. 1 eine Schnittdarstellung der Rohrabreißkupplung in einer ersten Ausführungsform in entkuppelter Stellung,

Fig. 2 die Darstellung der Teile nach dem Einschieben des Steckers und dem Zurückschieben des Kupplungskörpers,

Fig. 3 eine weitere Zwischenstellung während des Kuppelvorganges,

Fig. 4 die Relativlage der Teile des Ausführungsbeispiels der Fig. 1 bis 3 nach beendetem Kupplungsvorgang,

Fig. 5 eine Schnittdarstellung durch die Rohrabreißkupplung in einer zweiten Ausführungsform in entkuppelter Stellung,

Fig. 6 die Darstellung der Rohrabreißkupplung nach dem Zurückschieben des Kupplungskörpers,

Fig. 7 die Darstellung der Rohrabreißkupplung nach dem vollständigen Einschieben des Steckers in den Kupplungskörper,

Fig. 8 die Relativlage der Teile nach Beendigung des Kupplungsvorganges,

Fig. 9 die Darstellung der Schenkelfeder des Ausführungsbeispiels der Fig. 5 bis 8 und

Fig. 10 die Darstellung des Sternkörpers und des Ventilkörpers des Ausführungsbeispiels der Fig. 5 bis 8.

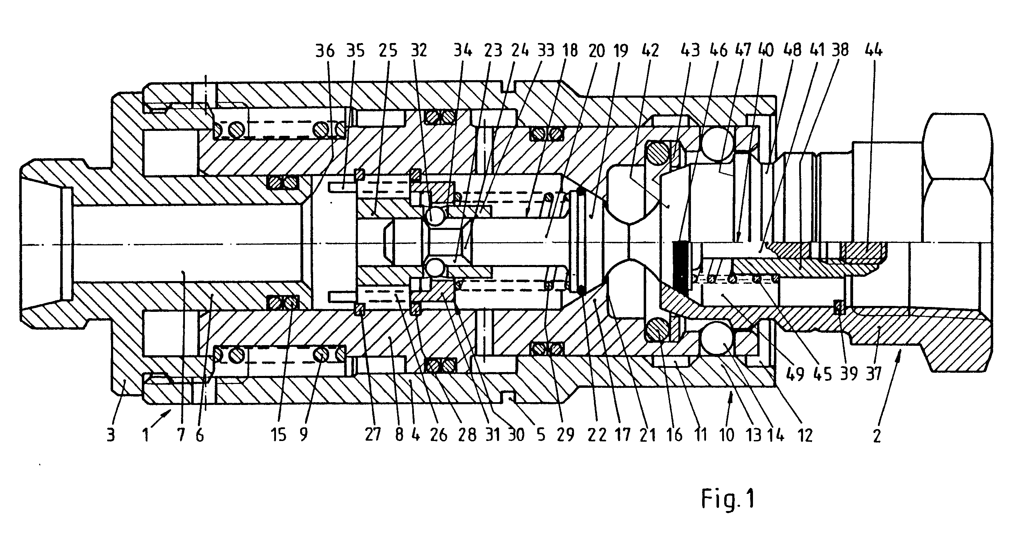

In Fig. 1 ist die Muffe 1 und der zugehörige Stecker 2 der Rohrabreißkupplung in entkuppelter Stellung dargestellt. Der Stecker 2 möge unter Druck stehen. Die Muffe 1 besitzt ein Gehäuse 3, mit dem über ein Gewinde eine Verriegelungshülse 4 fest verbunden ist. Die Verriegelungshülse 4 ist also gegenüber dem Gehäuse 3 nicht beweglich, sondern wird üblicherweise über Nuten 5, beispielsweise in einer Schottwandung, oder direkt an einem ortsfesten Rohr ortsfest gelagert. Ein Fortsatz 6 des Gehäuses 3 ragt in den Innenraum der Muffe 1 ein, wo er einen Großteil der axialen Durchgangsbohrung 7 der Muffe 1 bildet. Innerhalb bzw. zwischen diesen gehäusefesten Teilen ist ein Kupplungskörper 8 über eine Gesperrefeder 9 begrenzt verschiebbar gelagert bzw. gefesselt geführt. Zwischen der Verriegelungshülse 4 und dem Kupplungskörper 8 ist ein übliches Kugelgesperre 10 angeordnet, welches aus den beiden Ausweichnuten 11 und 12 und einem dazwischenliegenden Verriegelungsring 13 an der Verriegelungshülse 4 und aus in Durchbrechungen des Kupplungskörpers 8 gelagerten Kugeln 14 besteht. Mit dem Kupplungskörper 8 arbeitet eine am Fortsatz 6 gelagerte Dichtung 15 zusammen. Eine Dichtung 16 ist für die Abdichtung des Steckers 2 in der Muffe 1 vorgesehen.

Der Kupplungskörper 8 besitzt einen eingezogenen Rand 17, mit dem ein Ventilkörper 18, der einen Kopf 19 und einen Schaft 20 besitzt, zusammenarbeitet; der Kopf 19 ragt über eine am eingezogenen Rand 17 gebildete Stirnfläche 21 um den einfachen Ventilkörperhub in Richtung auf das Kugelgesperre 10 aus und bildet andererseits mit dem eingezogenen Rand 17 des Kupplungskörpers 8 ein Rückschlagventil 17, 19. Zu diesem Zweck ist auf dem Kopf 19 eine Dichtung 22 angeordnet. Der Schaft 20 des Ventilkörpers 18 besitzt eine Verriegelungsnut 23, deren Breite dem einfachen Ventilkörperhub entspricht. In Richtung auf den Kopf 19 des Ventilkörpers 18 endet die Verriegelungsnut 23 in einem Widerlager 24.

In dem Kupplungskörper 8, den Schaft 20 des Ventilkörpers 18 umgebend, ist ein Sternkörper 25 ortsfest und damit nicht beweglich gelagert, der über den Umfang verteilt drei abstehende Flügel 26 aufweist, so daß die Durchströmung des Kupplungskörpers 8 durch den Sternkörper 25 somit nicht behindert wird, wenn das Rückschlagventil 17, 19 geöffnet ist. Der Sternkörper 25 kann beispielsweise mit Hilfe zweier Sicherungsringe 27 und 28 ortsfest auf dem Kupplungskörper 8 gelagert sein. Der Ventilkörper 18 wird von einer Schließfeder 29, die in der dargestellten Weise angeordnet ist, in Schließrichtung kraftmäßig beaufschlagt.

Um den Sternkörper 25 herum, diesen überbrückend und teilweise bis in die Verriegelungsnut 23 des Ventilkörpers 18 hinabreichend ist ein Sperrmittel in Form eines Kugelgesperres 30 vorgesehen, welches im einzelnen einen Verriegelungsring 31 und Kugeln 32 aufweist, die über den Umfang verteilt angeordnet sind. Als Kugelkäfig dient der Sternkörper 25 bzw. ein zylindrischer Fortsatz 33 desselben, in welchem mehrere Durchbrechungen 34 entsprechend der Anzahl der Kugeln 32 vorgesehen sind. Dargestellt ist die Schließlage des Kugelgesperres 30, so daß die einzelnen Kugeln 32 in die Ausweichnut 23 hineinragen und ansonsten sich im Bereich des Fortsatzes 33 befinden. Nach außen hin werden die Kugeln am Heraustreten aus den Durchbrechungen 34 durch den Verriegelungsring 31 gehindert. Der Ventilkörper 18 ist im Bereich der Ausweichnut 23 verschiebbar, jedoch nicht weiter bis das Widerlager 24 auf den Kugeln 32 aufsetzt. Am Verriegelungsring 31 sind Fortsätze 35 vorgesehen, die zwischen den Flügeln 26 des Sternkörpers 25 hindurchragen und sich bis in die Nähe eines ortsfesten Anschlages 36 erstrecken, so daß beim relativen Einschieben des Kupplungskörpers 8 gegenüber dem Gehäuse 3 die Fortsätze 35 an dem ortsfesten Anschlag 36 des Fortsatzes 6 zur Anlage kommen. Damit wird der Verriegelungsring 31 aus seiner Verriegelungsstellung in die Offenstellung überführt, so daß das Kugelgesperre 30 öffnet. Das Ausweichen des Verriegelungsrings 31 in dieser Richtung ist möglich, weil der Verriegelungsring 31 auf der Schließfeder 29 oder auch einer separat dazu angeordneten Feder federnd abgestützt ist. Andererseits belastet die Schließfeder 29 den Verriegelungsring 31 in Richtung auf die Schließstellung des Kugelgesperres 30, denn die Fortsätze 35 an dem ortsfesten Anschlag 36 sind nicht in Anlage. Es versteht sich, daß die Fortsätze 35 auch mit dem Anschlag 36 bzw. dem Fortsatz 6 beispielsweise einstückig verbunden sein könnten, wobei dann der Verriegelungsring 31 ein separates Teil bilden könnte. Wesentlich ist, daß der Verriegelungsring 31 mit den Fortsätzen 35 den Sternkörper 25 mit Spiel übergreift und verschiebbar im Sinne des Öffnens und Schließens des Kugelgesperres 30 angeordnet ist. Der mögliche Hub der Fortsätze 35 bis zum Erreichen des ortsfesten Anschlages 36 kann gegenüber dem einfachen Ventilkörperhub sehr klein ausgebildet sein. Dieser Hub ist auf jeden Fall kleiner als der einfache Ventilkörperhub, da das Kugelgesperre 30 in seiner Offenstellung sein muß, wenn der einfache Ventilkörperhub zurückgelegt ist. Die Summe aus dem Hub zwischen den Fortsätzen 35 und dem ortsfesten Anschlag 36 sowie dem Öffnungsweg des Verriegelungsrings 31 in die entriegelte Stellung des Kugelgesperres ist kleiner als der Weg der Kugeln 14 des Kugelgesperres 10 von der Ausgangsstellung in die Ausweichnut 11.

Der Stecker 2 ist in bekannter Weise ausgebildet. Er besitzt ein Gehäuse 37, in dem ebenfalls ein Sternkörper 38 mit drei Flügeln über den Umfang mit Hilfe eines Sicherungsrings 39 gelagert ist. Im Sternkörper 38 ist ein Ventilkörper 40 mit seinem Schaft 41 um den einfachen Ventilkörperhub verschiebbar gelagert. Auch hier steht ein Kopf 42 des Ventilkörpers 40 um den einfachen Ventilkörperhub gegenüber einer Stirnfläche 43 am Gehäuse 37 über. Während der Ventilkörper 18 der Muffe 1 den doppelten Ventilkörperhub (und mehr) zurücklegen kann, ist die Bewegungsmöglichkeit des Ventilkörpers 40 durch eine im Sternkörper 38 mit Hilfe eines Gewindes verstellbar gelagerten Anschlagschraube 44 begrenzt. Zu dem Ventilkörper 40 gehört eine Schließfeder 45, die sich andererseits an dem Sternkörper 38 abstützt. Die Schließfeder 45 ist in ihrer Kraft und ihren sonstigen Eigenschaften wie die Schließfeder 29 des Ventilkörpers 18 der Muffe 1 ausgebildet. Beide Schließfedern 29 und 45 sind vorgespannt eingebaut. Es können somit hier ggfs. gleiche Schließfedern 29 und 45 eingesetzt werden. Es versteht sich, daß der Kopf 42 des Ventilkörpers 40 mit einer Dichtung 46 versehen ist. Das Gehäuse 37 des Steckers 2 besitzt einen umlaufenden Bund 47 und nachfolgend eine Verkeilungsnut 48 für den Eintritt der Kugeln 14 des Kugelgesperres 10 in der gekuppelten Stellung bzw. für das Zusammenwirken mit dem Kugelgesperre 10. Ein solcher Stecker 2 kann mit einer Muffe 1 einmal dann gekuppelt werden, wenn der Stecker 2 drucklos ist, sich also im Innenraum 49 kein unter Druck stehendes Medium befindet. In einem solchen Falle wird angenommen, daß beim Kuppeln der Ventilkörper 40 seine Schließstellung gegen die Kraft der Schließfeder 45 verlassen kann und sich in Richtung auf die Anschlagschraube 44 bewegt. Andererseits kann aber im Innenraum 49 eines Steckers 2 und damit in der an diesem angeschlossenen Leitung ein Medium unter Druck eingesperrt sein, wobei der Druck dann den Ventilkörper 40 zusätzlich in Schließrichtung beaufschlagt. In einem solchen Fall wird angenommen, daß sich beim Kuppeln (manueller Teil) der Ventilkörper 40 aus seiner Schließlage am Gehäuse 37 nicht bewegen läßt, also seine geschlossene Stellung beibehält. Das Öffnen des am Stecker 2 gebildeten Rückschlagventils geschieht dann nach vollendetem Kupplungsvorgang durch den muffenseitig einsetzenden Druck einer Druckquelle, beispielsweise eines Hydraulikmotors oder eines Kompressors.

Die einzelnen Teile der Muffe 1 und des Steckers 2 besitzen die aus den Fig. 1 bis 4 ersichtlichen geometrischen Abmessungen.

Die Wirkungsweise der Rohrabreißkupplung soll im Folgenden für verschiedene Bewegungsabläufe aufgezeigt werden. Dabei ist durch die Folge der Fig. 1 bis 4 veranschaulicht, welche Relativlage die einzelnen Teile der Kupplung beim Einkuppeln des Steckers 2 jeweils zueinander einnehmen. Anhand der Fig. 1, 2 und 4 sei zunächst das Kuppeln eines drucklosen Steckers 2 beschrieben:

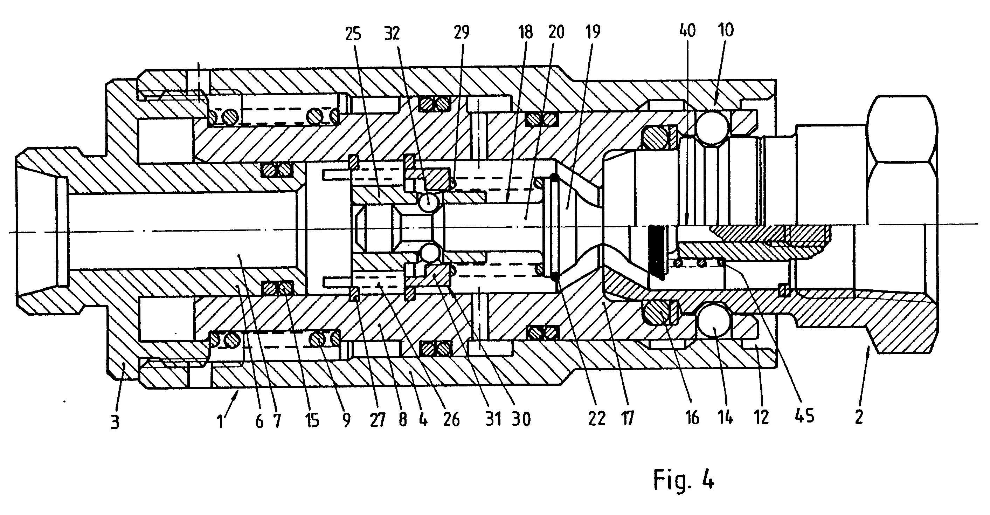

In der Ausgangsstellung nehmen die Teile die aus Fig. 1 bekannte Ausgangsstellung ein. Beide Ventilkörper 18 und 40 befinden sich in der Schließlage. Der Innenraum 49 ist drucklos, ebenso die Durchgangsbohrung 7 in der Muffe 1. Beim Einschieben des Steckers 2 in die Muffe 1 gelangen die überstehenden Köpfe 19 und 42 der beiden Ventilkörper 18 und 40 aneinander zur Anlage. Dies geschieht kurz vor oder nach-dem der Bund 47 auf die Kugeln 14 des Kugelgesperres 10 auftrifft, so daß bei weiterem Eindrücken des Steckers 2 in die Muffe 1 der Kupplungskörper 8 relativ gegenüber dem ortsfesten Gehäuse 3 verschoben wird. Stecker 2 und Kupplungskörper 8 bewegen sich nun gemeinsam in das Gehäuse 3 hinein, wobei die Ventilkörper 18 und 40 dabei keine Relativbewegung ausführen. Während dieser Bewegung setzen die Fortsätze 35 auf dem ortsfesten Anschlag 36 auf, so daß in der Folge das Kugelgesperre 30 mehr oder weniger geöffnet wird. Dieses Öffnen ist an sich für das Kuppeln eines drucklosen Steckers nicht erforderlich, so daß auch die Kugeln 32 dabei nicht aus der Verriegelungsnut 23 heraustreten müssen. Durch die dabei eintretende Zusammendrückung der Schließfeder 29 relativ zu der Schließfeder 45 ist auch eine Gewähr dafür gegeben, daß der Ventilkörper 18 jedenfalls nicht mehr als den einfachen Öffnungshub zurücklegt. Beide Ventilkörper 18 und 40 haben schließlich jeweils den einfachen Öffnungshub zurückgelegt, wenn die Stirnfläche 43 an der Stirnfläche 21 zur Anlage kommt, was dann geschieht, wenn die Kugeln 14 in die Ausweichnut 11 eintreten. Der Bund 47 kann nun über die Kugeln 14 hinweggleiten, so daß diese anschließend in die Verkeilungsnut 48 eintreten können und die zusammengedrückte Gesperrefeder 9 die Möglichkeit eröffnet, daß der Kupplungskörper 8 zusammen mit dem Gehäuse 37 des Steckers 2 aus dem Gehäuse 3 herausbewegt werden, bis die Stellung gemäß Fig. 4 erreicht wird. Stecker 2 und Muffe 1 sind damit miteinander bereits gekuppelt. Beide Ventilkörper 18 und 40 sind um je den einfachen Öffnungshub geöffnet. Sobald die Fortsätze 35 von dem ortsfesten Anschlag 36 freikommen, verriegelt das Kugelgesperre 30 durch Anlage der Kugeln 32 an dem Widerlager 24. Fig. 4 zeigt diese gekuppelte Stellung zwischen Stecker 2 und Muffe 1 mit den beiden geöffneten Ventilkörpern 18 und 40, also in Bereitschaft zum Durchströmen in gleich welcher Richtung. Die beiden Ventilkörper 18 und 40 sind in jeder Richtung arretiert.

Das Auskuppeln eines drucklosen Steckers 2 geschieht wie folgt:

Durch Ziehen an dem Stecker 2 gegenüber dem ortsfesten Gehäuse 3 der Muffe 1 bewegt sich der Kupplungskörper 8 um ein gewisses Stück aus dem Gehäuse 3 heraus, wobei auch hier die Gesperrefeder 9 zusammengedrückt wird. Erreichen die Kugeln 14 die Ausweichnut 12, so kann der Stecker 2 ganz herausgezogen werden, wobei gleichzeitig sein Ventilkörper 40 und der Ventilkörper 18 der Muffe 1 in die Schließstellung überführt werden, was durch Krafteinwirkung der jeweiligen Schließfedern 29 und 45 geschieht. Auch der Ventilkörper 18 kann sich dabei in die Schließlage bewegen, obwohl das Kugelgesperre 30 geschlossen bleibt. Die Verriegelungsnut 23 läßt diesen einfachen Ventilkörperhub zu, d. h. besitzt eine entsprechende Breite. Es wird dann schließlich die Stellung gemäß Fig. 1 erreicht.

Die Fig. 1 - 4 verdeutlichen den Kupplungsvorgang mit einem unter Druck stehenden Stecker 2:

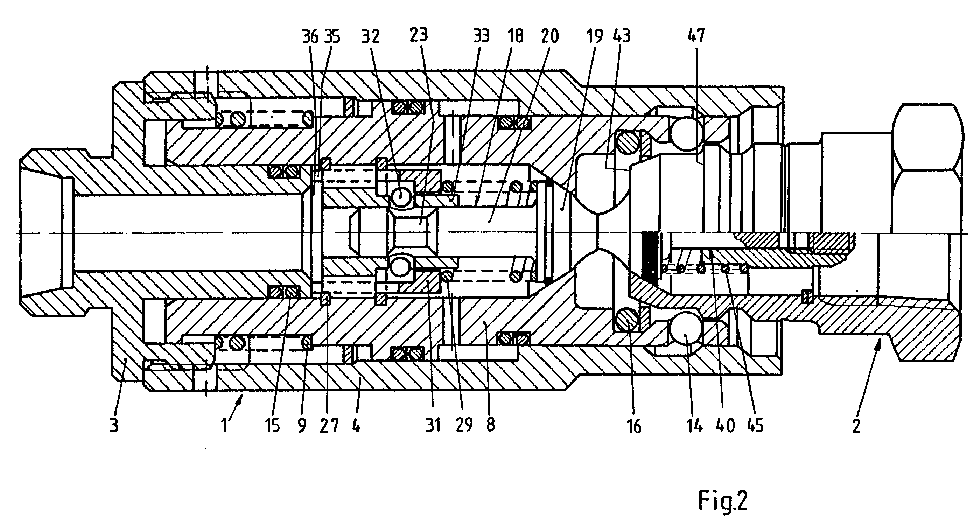

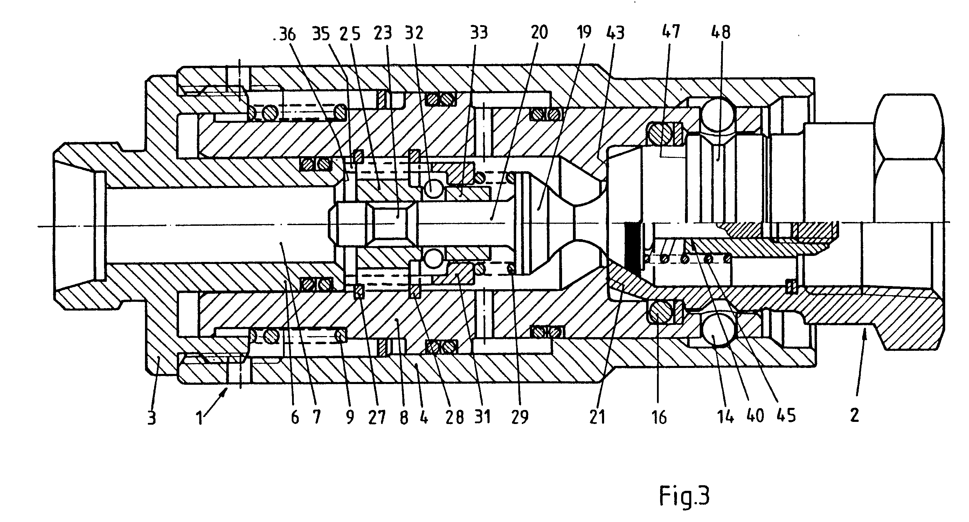

Dabei wird der Stecker 2 zunächst ebenfalls mit seinem Bund 47 an den Kugeln 14 zur Anlage gelangen, so daß beim weiteren Einschieben der Kupplungskörper 8 gegenüber dem Gehäuse 3 in der Muffe 1 eingeschoben wird. Beide Ventilkörper 18 und 40 befinden sich dabei in geschlossener Stellung. Auch hier treffen die Fortsätze 35 auf dem ortsfesten Anschlag 36 auf und das Kugelgesperre 30 entriegelt, noch bevor die Kugeln 14 in die Ausweichnut 11 eintreten können, wie dies Fig. 2 zeigt. Da der Ventilkörper 40 des Steckers 2 unter Druck steht, verbleibt dieser dabei in geschlossener Stellung und der Ventilkörper 19 öffnet in der Folge um den doppelten Ventilkörperhub, wie dies anhand der Fig. 3 verdeutlicht ist. Dabei gelangt die Stirnfläche 43 des Steckers 2 in Anlage an der Stirnfläche 21 des Kupplungskörpers 8 der Muffe 1. Durch das Überfahren der Kugeln 14 mit dem Bund 47 haben nunmehr die Kugeln 14 Gelegenheit, in die Verkeilungsnut 48 einzutreten, so daß sich die Kraft der zusammengedrückten Gesperrefeder 9 auswirken kann. Dabei bewegt sich der Kupplungskörper 8 so relativ zu dem Gehäuse 3, daß das Kugelgesperre 10 verriegelt (Fig. 4), während das Kugelgesperre 30 noch solange entriegelt ist, bis die Fortsätze 35 von dem ortsfesten Anschlag 36 freikommen. Jedoch kann das Kugelgesperre 30 auch in dieser Stellung noch nicht verriegeln, weil der Verriegelungsring 31 durch die Kugeln 32 gehindert ist, die sich auf dem Schaft 20 außerhalb der Verriegelungsnut 23 abstützen. Der Ventilkörper 18 ist dabei immer noch um den doppelten Öffnungshub offengehalten, während der Ventilkörper 40 noch geschlossen ist. Nach dem Einschalten der muffenseitig vorgesehenen Druckquelle wird jedoch der Ventilkörper 40 des Steckers 2 geöffnet, wobei der Ventilkörper 18 dem Ventilkörper 40 folgen kann, was einerseits durch den dynamischen Druck, andererseits durch die Kraft der vergleichsweise mehr zusammengedrückten Schließfeder 29 bewirkt wird. Wenn der Ventilkörper 40 an der Anschlagschraube 44 anschlägt, also den einfachen Öffnungshub zurückgelegt hat, gelangt der Ventilkörper 18 in eine solche Stellung, daß die Kugeln 32 in der Nähe des Widerlagers 24 in die Verriegelungsnut 23 eintreten können, so daß die Schließfeder 29 wiederum den Verriegelungsring 31 so verschieben kann, daß das Kugelgesperre 30 verriegelt. Damit sind auch hier gemäß Fig. 4 die Ventilkörper 18 und 40 in beiden Richtungen zwischen Anschlägen verriegelt bzw. an einer Bewegung gehindert, gleich in welcher Richtung eine weitere Durchströmung der Kupplung erfolgt. Das Entkuppeln geschieht in gleicher Weise, wie dies vorher dargelegt wurde.

Es ist weiterhin ersichtlich, daß ein Stecker 2 auch dann entkuppelt werden kann, gleichgültig oder er dabei unter Druck steht oder nicht, wenn er beispielsweise infolge eines versehentlichen Kupplungsvorganges in eine falsche Muffe 1 eingesteckt wurde, also eine Leitungsverwechselung stattgefunden hat. Dies ist auch unabhängig davon, ob z. B. beim Kuppeln eines unter Druck stehenden Steckers vorher die muffenseitige Druckquelle eingeschaltet wurde oder nicht.

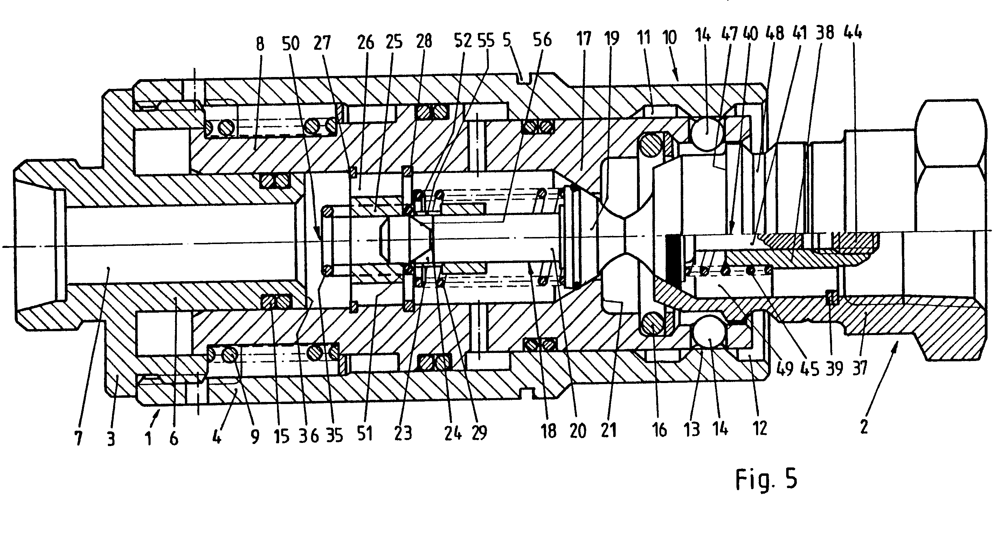

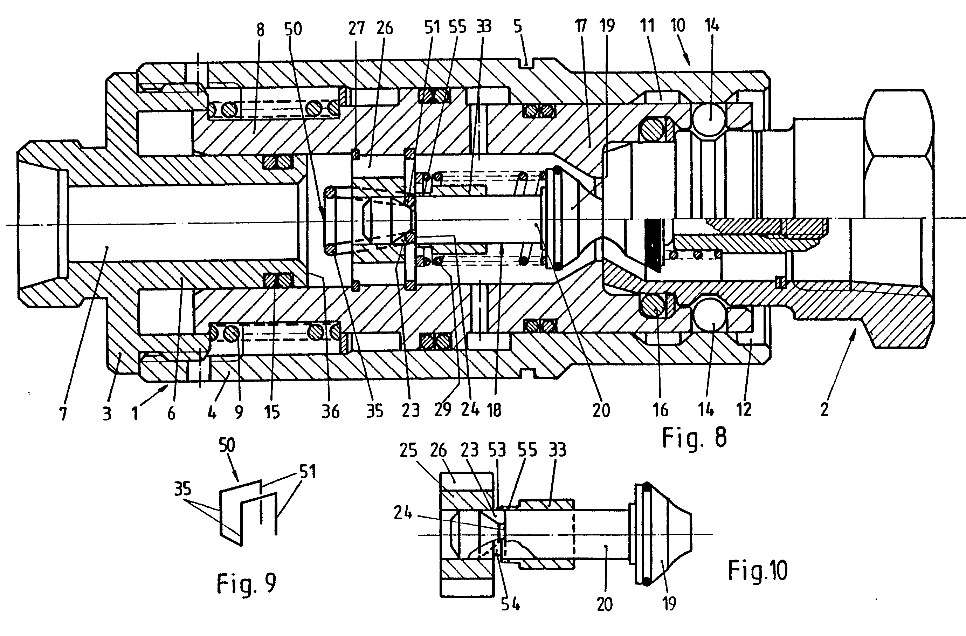

Ein weiteres Ausführungsbeispiel der Erfindung ist in den Fig. 5 bis 10 dargestellt. Für gleiche Teile wie bei dem Ausführungsbeispiel der Fig. 1 - 4 sind gleiche Bezugszeichen verwendet. Lediglich anstelle des im wesentlichen aus den beiden Teilen (Verriegelungsring 31, Kugeln 32) bestehenden Kugelgesperre 30 ist hier eine Schenkelfeder bzw. Klemmfeder 50 (Fig. 9) vorgesehen, die aus einem Teil bestehen kann, weil sie in sich elastisch nachgiebig ist. Der Sternkörper 25 und der Schaft 20 des Ventilkörpers 18 sind hierbei angepaßt ausgebildet. Im einzelnen weist die Klemmfeder 50 die aus Fig. 9 ersichtliche Formgebung auf, wobei ihre beiden Enden 51 radial federnd und vorgespannt vorgesehen sind, damit sie eine ähnliche Funktion ausüben können, wie die Kugeln 32 des Kugelgesperres 30. Das rückwärtige Ende der Klemmfeder 50 bildet auch hier die Fortsätze 35, die mit dem ortsfesten Anschlag 36 zusammenarbeiten. Die Klemmfeder 50 übergreift den Sternkörper 25 mit Spiel, so daß auch hier eine Relativverschiebung der Klemmfeder 50 gegenüber dem Sternkörper 25 in begrenztem Maße durch Einwirkung des ortsfesten Anschlages 36 einerseits und der Schließfeder 29 andererseits stattfinden kann. Dabei stützt sich die Schließfeder 29 mit Hilfe eines Federtellers 52 in bestimmten Situationen an den freien Enden 51 der Klemmfeder 50 ab.

Der Sternkörper 25, der auch hier mit Hilfe der beiden Sicherungsringe 27 und 28 ortsfest auf dem Kupplungskörper 8 gelagert ist, besitzt die aus Fig. 10 am besten ersichtliche angepaßte Formgebung. Die Durchbrechungen 34 in dem Fortsatz 33 sind hier als Abfräsungen 53 entsprechend den freien Enden 51 der Schenkelfeder 50 tangential und um 180° gegeneinander versetzt vorgesehen. Um jeweils 90° zu diesen Abfräsungen 53 versetzt sind Vorsprünge 54 angeordnet, die sich in radialer Richtung weiter erstrecken, so daß der Federteller 52 der Schließfeder 29 in der entsprechenden Relativlage hier aufsetzen kann, so daß das radiale Einfedern der freien Enden 51 in die Durchbrechungen 34 der Abfräsungen 53 nicht behindert wird. In Richtung auf das offene Ende der Muffe 1 zu schließen sich an die Abfräsungen 53 mit den Durchbrechungen 34 Rastnocken 55 für die freien Enden 51 der Klemmfeder 50 an. Im Bereich der Rastnocken 55 sind keine Durchbrechungen 34 vorgesehen. Der Schaft 20 des Ventilkörpers 18 besitzt auch hier die Verriegelungsnut 23 mit dem Widerlager 24. Die Breite der Verriegelungsnut 23 ist jedoch kleiner als der einfache Ventilkörperhub ausgebildet (S). Das dem Widerlager 24 abgekehrte Teil der Verriegelungsnut 23 endet in einer Schrägfläche 56, die in den Durchmesser des Schaftes 20 übergeht.

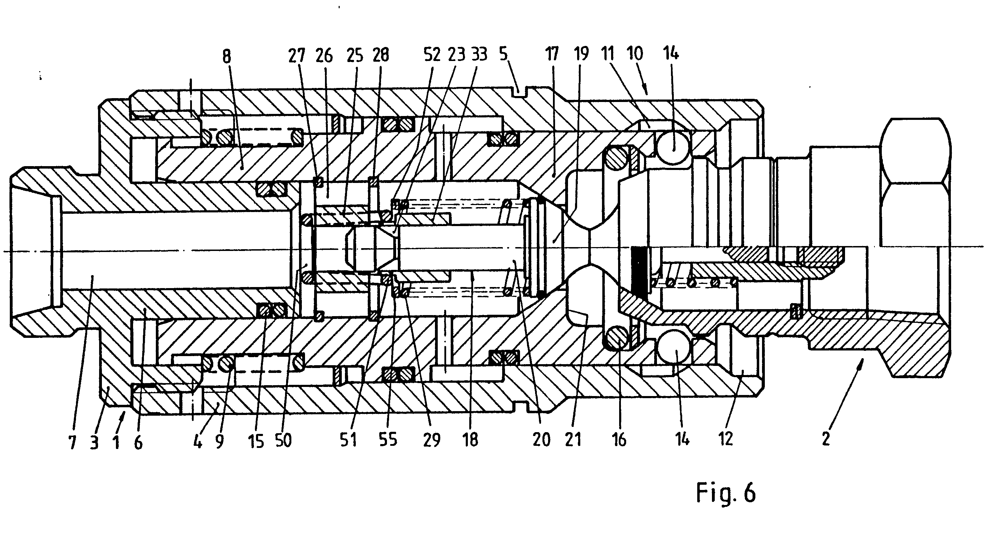

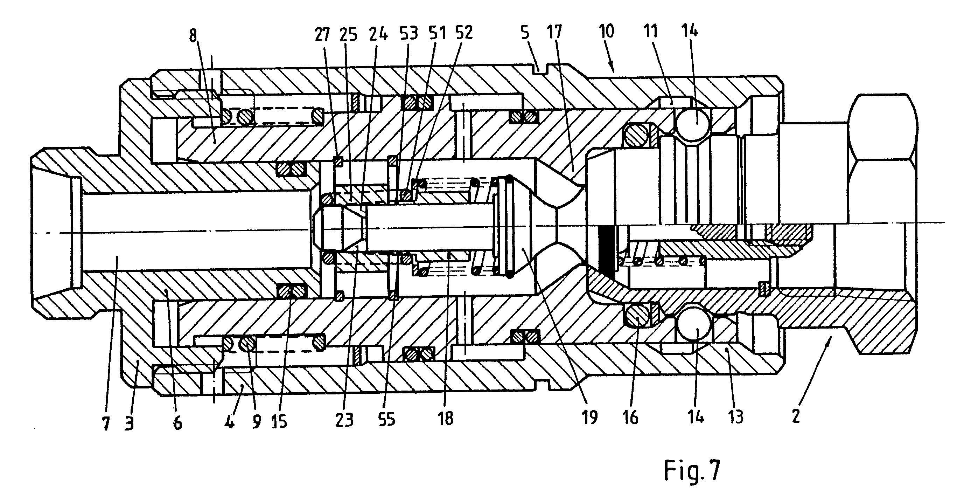

Die Fig. 5 - 8 verdeutlichen die Relativlage der Teile beim Kuppeln eines unter Druck stehenden Steckers 2. Fig. 5 zeigt die Ausgangslage der Teile. Beide Ventilkörper 18 und 40 befinden sich in der Schließstellung. Durch die Kraft der Schließfeder 29 ist die Klemmfeder 50 in ihrer rückwärtigen Endlage gegenüber dem Sternkörper 25 verschoben, so daß die freien Enden 51 zwar im Bereich der Abfräsungen 53 sind, jedoch durch die Durchbrechungen 34 nicht weiter nach innen einfedern können, weil sie an dieser Bewegung durch den Durchmesser des Schaftes 20 hinter der Verriegelungsnut 23 gehindert sind. Damit wird auch klar, weshalb die Verriegelungsnut 23 in diesem Falle axial eine kleinere Erstreckung aufweisen muß als es dem einfachen Ventilkörperhub entspricht. Beim Einschieben des Steckers 2 bewegen sich die Teile zunächst relativ zueinander, wie dies vorangehend am Ausführungsbeispiel der Fig. 1 bis 4 beschrieben wurde. Der Ventilkörper 18 ändert dabei seine relative Lage zu dem Kupplungskörper 8 bzw. dem Sternkörper 25 nicht, bis die Fortsätze 35 auf dem ortsfesten Anschlag 36 aufsetzen, so daß in der fortgesetzten Bewegung die freien Enden 51 der Klemmfeder 50 aus ihrer Stellung von der Abfräsung 53 heraus nach außen aufspreizen und sich auf dem Bereich der Rastnocken 55 auflagern, wie dies anhand von Fig. 6 verdeutlicht ist. Dies geschieht unter relativer Zusammendrückung der Schließfeder 29. In dieser Stellung sind aber die freien Enden 51 gehindert, in die Verriegelungsnut 23 einzutreten, so daß nunmehr der Ventilkörper 18 in der fortgesetzten Bewegung gemäß Fig. 7 um den doppelten Öffnungshub relativ zum Sternkörper 25 und zum Kupplungskörper 8 öffnen kann. Es versteht sich, daß dabei das Kugelgesperre 10 entsprechend geöffnet hat und letztlich in die Verriegelungsstellung gelangt. Nach dem Einschalten der muffenseitigen Druckqelle öffnet der Druck den Ventilkörper 40 des Steckers 2 und der Ventilkörper 18 der Muffe 1 begibt sich in eine Stellung, die dem einfachen Ventilkörperöffnungshub entspricht. Dabei kommen die Fortsätze 35 der Klemmfeder 50 von dem ortsfesten Anschlag 36 frei, so daß die Schließfeder 29 die Klemmfeder 50 von den Rastnocken 55 zurückbewegt in den Bereich der Abfräsungen 53 und der dort vorgesehenen Durchbrechungen 34. Damit kann die Klemmfeder 50 bzw. das von ihr gebildete Gesperre verriegeln. Es wird die Stellung der Teile gemäß Fig. 8 erreicht. Es versteht sich, daß die Drahtstärke der Klemmfeder 50 auf die geometrischen Abmessungen der Abfräsung 53, der Verriegelungsnut 23, der Vorsprünge 54 und der Rastnocken 55 abgestimmt ist.

Beim Kuppeln eines drucklosen Steckers 2 legt der Ventilkörper 18 nur den einfachen Ventilkörperhub zurück, so daß auch hier die Schließfeder 29 Gelegenheit hat, die freien Enden 51 der Klemmfeder 50 von den Rastnocken 55 in den Bereich der Abfräsungen 53 zu verschieben. Auch hier findet damit die Verriegelung statt.

**Patentansprüche**

1. Auch bei unter Druck stehendem Stecker (2) kuppelbare Rohrabreißkupplung für insbes. Hydraulikleitungen, bestehend aus zwei ineinandersteckbaren und in der gekuppelten Stellung über ein von einer Gesperrefeder (9) belastetes Kugelgesperre (10) zwischen Verriegelungshülse (4) und verschiebbarem Kupplungskörper (8) verriegelbaren Kupplungshälften in Form des Steckers (2) und einer Muffe (1) mit je einem durch eine Schließfeder (29, 45) in Schließrichtung belasteten, in entkuppelter Stellung der Kupplungshälften in Schließrichtung gehaltenen und in einem in dem jeweiligen Kupplungskörper (8, 37) vorgesehenen Sternkörper (25, 38) geführtem Ventilkörper (18, 40), wobei der Ventilkörper (40) des Steckers (2) bis zur Anlage an einem seine Offenstellung begrenzenden Anschlag um den einfachen Ventilkörperhub, der Ventilkörper (18) der Muffe (1) jedoch um den doppelten Ventilkörperhub verschiebbar gelagert ist und ein am Ende des einfachen Ventilkörperhubs der Muffe wirksames, mechanisch ein- und ausrückbares Sperrmittel zur Freigabe des doppelten Ventilkörperhubs bzw. zur Verriegelung der beiden Ventilkörper (18, 40) in der Offenstellung zwischen den Anschlägen vorgesehen ist, wobei ein mit der Verriegelungshülse (4) verbundener gehäuseseitiger Anschlag (36) vorgesehen ist, der innerhalb des einfachen Hubs des Ventilkörpers (18) mit dem Sperrmittel in Wirkverbindung tritt, dadurch gekennzeichnet, daß der Sternkörper (25) ortsfest an dem Kupplungskörper (8) gelagert ist und mindestens eine Durchbrechung (34) für den Eingriff eines Teils (32, 51) des Sperrmittels (30, 50) in eine im Schaft (20) des Ventilkörpers (18) angeordnete Verriegelungsnut (23) aufweist, und daß ein weiterer Teil (35) des Sperrmittels (30, 50) den Sternkörper (25) in axialer Richtung mit Spiel übergreifend vorgesehen und einerseits von dem gehäuseseitigen Anschlag (36) verschiebbar und andererseits von einer Feder (29) belastet angeordnet ist.

2. Rohrabreißkupplung nach Anspruch 1, dadurch gekennzeichnet, daß der Verschiebeweg des Kupplungskörpers (8) gegenüber der ortsfesten Verriegelungshülse (4) bis zum Erreichen der Ausweichnut (11) durch die Kugeln (14) des Kugelgesperres (10) gleich oder größer ausgebildet ist als die Summe aus dem Abstand des weiteren Teils (35) des Sperrmittels (30, 50) von dem gehäuseseitigen Anschlag (36) und dem Öffnungsweg des Sperrmittels.

3. Rohrabreißkupplung nach Anspruch 1 oder 2, dadurch gekennzeichnet, daß die Verriegelungsnut (23) im Schaft (20) des Ventilkörpers (18) der Muffe (1) in einem Widerlager (24) für das Sperrmittel (30, 50) endet und daß das Widerlager (24) in einer dem einfachen Ventilkörperhub entsprechenden Entfernung von dem einen Teil (32, 51) des Sperrmittels (30, 50) in der Ausgangsstellung angeordnet ist.

4. Rohrabreißkupplung nach Anspruch 1, dadruch gekennzeichnet, daß als Feder zur Beaufschlagung des Sperrmittels (30, 50) die Schließfeder (29) des Ventilkörpers (18) vorgesehen ist.

5. Rohrabreißkupplung nach Anspruch 1 bis 3, dadurch gekennzeichnet, daß das Sperrmittel ein Kugelgesperre (30) ist, wobei der Sternkörper (25) einen Kugelkäfig für die zum Eingriff in die Verriegelungsnut (23) des Schaftes (20) des Ventilkörpers (18) bestimmten Kugeln (32) bildet und von einem Verschiebering (31) umgeben ist, dessen Fortsätze (35) den Sternkörper (25) axial übergreifen.

6. Rohrabreißkupplung nach Anspruch 5, dadurch gekennzeichnet, daß die Verriegelungsnut (23) eine dem einfachen Ventilkörperhub entsprechende Breite aufweist.

7. Rohrabreißkupplung nach Anspruch 1 bis 3, bei der das Sperrmittel eine Schenkelfeder aufweist, die den Sternkörper überbrückt, dadurch gekennzeichnet, daß die Schenkelfeder (50) mit ihren freien Enden (51) durch die Durchbrechung (34) des Sternkörpers (25) in die Verriegelungsnut (23) im Schaft (20) des Ventilkörpers (18) eingreift.

8. Rohrabreißkupplung nach Anspruch 7, dadurch gekennzeichnet, daß die Durchbrechung (34) im Sternkörper (25) aus etwa parallel geführten und den Innendurchmesser schneidenden Abfräsungen (53) besteht, an die sich in Schließrichtung des Ventilkörpers (18) Rastnocken (55) für die freien Enden (51) der Schenkelfeder (50) anschließen.

9. Rohrabreißkupplung nach Anspruch 7 und 8, dadurch gekennzeichnet, daß - in radialer Richtung gesehen - der Abstand zwischen einer Abfräsung (53) und dem zugehörigen Rastnocken (55) mindestens der halben Materialstärke der Schenkelfeder (50) - vorzugsweise etwas mehr - entspricht, und daß die Abfräsung (53) und der Rastnocken (55) etwa symmetrisch zu der Umfangsfläche des Schaftes (20) des Ventilkörpers (18) angeordnet sind.

10. Rohrabreißkupplung nach Anspruch 7 bis 9, dadurch gekennzeichnet, daß der Sternkörper (25) im Bereich der Abfräsungen (53) Vorsprünge (54) aufweist, an denen sich die Feder, insbes. die Schließfeder (29) des Ventilkörpers, in der Verrieglungsstellung der Schenkelfeder (50) abstützt.

## Claims

1. Pipe break-away coupling, for hydraulic lines in particular, which coupling can be coupled even with plug (2) under pressure and consists of two coupling halves in the form of the plug (2) and a socket (1), which can be plugged one into the other and can be locked in the coupled position by means of a ball catch (10), loaded by a catch spring (9), between the locking sleeve (4) and displaceable coupling body (8), each half having a valve body (18, 40), loaded by a closing spring (29, 45) in closing direction, held in closing direction in uncoupled position of the coupling halves and guided in a star body (25, 38) provided in the respective coupling body (8, 17), the valve body (40) of the plug (2) being mounted so as to be displaceable by the single valve body stroke up to contact with a stop limiting its open position, the valve body (18) of the sleeve (1) however being mounted so as to be displaceable by twice the valve body stroke and a mechanically engageable and disengageable blocking means, effective at the end of the single valve body stroke of the sleeve, being provided to release the double valve body stroke or for locking the two valve bodies (18, 40) in the open position between the stops, a stop (36) on the housing side and connected to the locking sleeve (4) being provided, which stop comes into effective connection with the blocking means within the single stroke of the valve body (18), characterized in that the star body (25) is mounted in a fixed position on the coupling body (8) and has at least one clearance (34) for the engagement of a part (32, 51) of the blocking means (30, 50) into a locking groove (23) arranged in the shank (20) of the valve body (18), and in that a further part (25) of the blocking means (30, 50), embracing with play the star body (25) in axial direction is provided and is arranged so as to be displaceable from the stop (36) on the housing side on the one hand and so as to be loaded by a spring (29) on the other hand.

2. Pipe break-away coupling according to Claim 1, characterized in that the displacement travel of the coupling body (8) with respect to the fixed locking sleeve (4) until reaching the escape groove (11) through the bores (14) of the bore catch (10) is designed to be equal to or greater than the sum of the distance of the further part (35) of the blocking means (30, 50) from the stop (36) on the housing side and the opening travel of the blocking means.

3. Pipe break-away coupling according to Claim 1 or 2, characterized in that the locking groove (23) in the shank (20) of the valve body (18) of the sleeve (1) ends in an abutment (24) for the blocking means (30, 50) and in that the abutment (24) is arranged in the initial position at a distance from the one part (32, 51) of the blocking means (30, 50) which corresponds to the single valve body stroke.

4. Pipe break-away coupling according to Claim 1, characterized in that the closing spring (29) of the valve body (18) is provided as spring for loading the blocking means (30, 50).

5. Pipe break-away coupling according to Claims 1 to 3, characterized in that the blocking means is a ball catch (30), the star body (25) forming a ball cage for the balls (32) intended for engaging into the locking groove (23) of the shank (20) of the valve body (18) and being surrounded by a displacement ring (32), the extensions (35) of which axially embrace the star body (25).

6. Pipe break-away coupling according to Claim 5, characterized in that the locking groove (23) has a width corresponding to the single valve body stroke.

7. Pipe break-away coupling according to Claims 1 to 3, in which the blocking means has a leg spring, which bridges the star body, characterized in that the leg spring (50) engages with its free ends (51) through the clearance (34) of the star body (25) into the locking groove (23) in the shank (20) of the valve body (18).

8. Pipe break-away coupling according to Claim 7, characterized in that the clearance (34) in the star body (25) consists of milled-away reliefs (53) disposed approximately in parallel and intersecting the inside parameter, to which reliefs latch cams (55) for the free ends (51) of the leg spring (50) adjoin in closing direction of the valve body (18).

9. Pipe break-away coupling according to Claims 7 and 8, characterized in that - seen in radial direction the distance between a milled-away relief (53) and the associated latch cam (55) corresponds to at least half the material thickness of the leg spring (50) - preferably somewhat more - and in that the milled-away relief (53) and the latch cam (55) are arranged approximately symmetrical to the circumferential surface of the shank (20) of the valve body (18).

10. Pipe break-away coupling according to Claims 7 to 9, characterized in that the star body (25) has in the region of the milled-away reliefs (53) projections (54), against which the spring, in particular the closing spring (29) of the valve body, bears in the locking position of the leg spring (50).

## Revendications

1. Raccord de tuyau amovible pouvant également se raccorder si le connecteur (2) est sous pression, en particulier pour conduits hydrauliques, se composant de deux moitiés de raccord enfichables l'une dans l'autre et verrouillables en position couplée au moyen d'un encliquetage à billes (10) sollicité par un ressort d'encliquetage (9) entre la douille de verrouillage (4) et un corps de raccord coulissant (8), ces moitiés de raccord étant sous la forme du connecteur (2) et d'un manchon (1) ayant l'un et l'autre un clapet (18, 40) sollicité chacun par un ressort de fermeture (29, 45) en sens de fermeture, maintenu en position fermée en situation découplée des moitiés de raccord et guidé dans un corps en étoile (25, 38) prévu dans l'élément de raccord respectif (8, 37), le clapet (40) du connecteur (2) étant monté pour coulisser jusqu'à rencontre d'une butée limitant sa position d'ouverture à la simple course du clapet, tandis toutefois que le clapet (18) du manchon (1) est monté pour coulisser selon la double course du clapet, un moyen de blocage mécaniquement embrayable et débrayable étant prévu à l'extrémité de la course simple du clapet du manchon, ce moyen agissant pour libérer la double course du clapet et pour verrouiller les deux clapets (18, 40) en position ouverte entre les butées, une butée (36) fixée à la douille de verrouillage (4) sur le côté correspondant au boîtier étant prévue, cette butée coopérant avec le moyen de blocage à l'intérieur de la course simple du clapet (18) du manchon,

caractérisé en ce que le corps en étoile (25) est monté fixe sur le corps de raccord (8) et présente au moins un orifice (34) pour l'insertion d'une pièce (32, 51) du moyen de blocage (30, 50) dans une gorge de verrouillage (23) ménagée dans la tige (20) du clapet (18), et en ce qu'une autre pièce (35) du moyen de blocage (30, 50) est prévue, laquelle dépasse au delà du corps en étoile (25) dans le sens axial avec du jeu, et est d'une part coulissante sous l'action de la butée (36) située du côté du boîtier (3) du manchon et d'autre part sollicitée par un ressort (29).

2. Raccord de tuyau amovible selon la revendication 1, caractérisé en ce que la course du corps de raccord coulissant (8) par rapport à la douille fixe de verrouillage (4), jusqu'à ce que la gorge de dégagement (11) soit atteinte par les billes (14) de l'encliquetage à billes (10), est égale ou supérieure à la somme de la distance entre l'autre pièce (35) du moyen de blocage (30, 50) et la butée (36) située du côté du boîtier et de la course d'ouverture du moyen de blocage.

3. Raccord de tuyau amovible selon la revendication 1 ou 2, caractérisé en ce que la gorge de verrouillage (23) dans la tige (20) du clapet (18) du manchon (1) se termine par une butée (24) pour le moyen de blocage (30, 50) et en ce que la butée (24) est disposée, par rapport à la pièce (32, 51) du moyen de blocage (30, 50) dans sa position initiale, à une distance correspondant à la course simple du clapet.

4. Raccord de tuyau amovible selon la revendication 1, caractérisé en ce qu'il est prévu, comme ressort destiné à solliciter le moyen de blocage (30, 50), le ressort (29) de fermeture du clapet (18).

5. Raccord de tuyau amovible selon les revendications 1 à 3, caractérisé en ce que le moyen de blocage est un encliquetage à billes (30), le corps en étoile (25) constituant une cage à billes pour les billes (32) destinées à s'engager dans la gorge de verrouillage (23) de la tige (20) du clapet (18) et étant entouré d'une bague coulissante (31) dont les prolongements (35) dépassent axialement au delà du corps en étoile (25).

6. Raccord de tuyau amovible selon la revendication 5, caractérisé en ce que la gorge de verrouillage (23) présente une largeur qui correspond à la course simple du clapet.

7. Raccord de tuyau amovible selon les revendications 1 à 3, dans lequel le moyen de blocage présente un ressort replié qui enjambe le corps en étoile, caractérisé en ce que le ressort replié (50) s'engage avec ses extrémités libres (51) à travers l'orifice (34) du corps en étoile (25) dans la gorge de verrouillage (23) dans la tige (20) du clapet (18).

8. Raccord de tuyau amovible selon la revendication 7, caractérisé en ce que l'orifice (34) dans le corps en étoile (25) consiste en des fraisures (53) guidées de manière à peu près parallèle et coupant le diamètre intérieur, auxquelles se raccordent, dans le sens de fermeture du clapet (18), des crans (55) pour les extrémités libres (51) du ressort replié (50).

9. Raccord de tuyau amovible selon les revendications 7 et 8, caractérisé en ce que, vue dans le sens radial, la distance entre une fraisure (53) et le cran (55) correspondant représente au moins la moitié de l'épaisseur du matériau du ressort coudé (50), et de préférence un peu plus, et en ce que la fraisure (53) et le cran (55) sont disposés à peu près symétriquement par rapport à la surface périphérique de la tige (20) du clapet (18).

10. Raccord de tuyau amovible selon les revendications 7 à 9, caractérisé en ce que le corps en étoile (25) présente, dans la région des fraisures (53), des protubérances (54) sur lesquelles prend appui le ressort, en particulier le ressort (29) de fermeture du clapet, dans la position de verrouillage du ressort replié (50).

Fig. 1

Fig.2

Fig.3

EP 0 187 238 B1

Fig. 4

Fig. 5

Fig. 6

Fig. 7

Fig. 8

Fig. 9

Fig. 10